# EUROPÄISCHE PATENTSCHRIFT

(11) **EP 0 365 948 B1**
(45) Veröffentlichungstag und Bekanntmachung des Hinweises auf die Patenterteilung: **13.01.1993**
(21) Anmeldenummer: 89119103.3
(22) Anmeldetag: 14.10.1989
(51) Int. Cl.: G02B 23/12, H04N 5/33

(54) **Wärmebildgerät mit Detektorabgleich**
Thermal imager with detector alignment
Dispositif de formation d'images thermique avec alignement du détecteur

(30) Priorität: 25.10.1988 DE 3836294
(43) Veröffentlichungstag der Anmeldung: 02.05.1990
(73) Patentinhaber: ELTRO GmbH Gesellschaft für Strahlungstechnik, D-69011 Heidelberg (DE)
(72) Erfinder: Weigel, Wolfgang, D-6901 Dossenheim (DE); Vogt, Wolf-Dieter, D-6907 Nussloch (DE)
(74) Vertreter: Muschka, Wilhelm, Dipl.-Ing.

(56) Entgegenhaltungen:
- WO-A-86/03916
- DE-B- 2 009 312
- US-A- 4 010 367
- US-A- 4 419 692

## Beschreibung

Die Erfindung bezieht sich auf ein Wärmebildgerät mit Detektorabgleich nach dem Oberbegriff des Anspruchs 1.

Ein solches Wärmebildgerät ist aus dem Dokument W0-A- 8 603 916 bekannt. Demselben ist jedoch kein Hinweis darüber zu entnehmen, wie eine die Wärmestrahlung optisch manipulierende Scheibe ausgebildet sein muß, um gegebenenfalls unterschiedliche Teilreflexionen oder Transmissionen zu erhalten, die sich jeweils mit transparenten bzw. total reflektierenden Scheibensegmenten abwechseln. Ein ähnliches Wärmebildgerät ist auch aus dem Dokument DE-B- 2 009 312 bekannt, bei dem die zweite Referenzquelle jedoch aus einer Solenoideinrichtung besteht.

Die Aufgabe der Erfindung wird daher in der Schaffung einer Abgleichmöglichkeit gesehen, die bei einem an sich bekannten Wärmebildgerät die Verstärkung und die Empfindlichkeit der Detektoreinzelelement-Signale gleichzeitig automatisch einstellt. Diese Aufgabe wird erfindungsgemäß durch die im Kennzeichen des Anspruchs 1 genannten Merkmale gelöst. Dadurch lassen sich in einfacher Weise zwei (oder bedarfsweise auch mehr) Strahlungsintensitäten in den Verstärkerbereich der Signalverarbeitung abstrahlen, ohne daß hierbei die aus der Szene abgetasteten Wärmesignale beeinflußt werden.

Im folgenden wird ein Ausführungsbeispiel der Erfindung an Hand einer Zeichnung näher erläutert, wobei die in den einzelnen Figuren einander entsprechenden Teile die gleichen Bezugszahlen aufweisen. Es zeigt
Fig. 1 die Prinzipskizze eines Wärmebildkanals,
Fig. 2 die Schwingamplitude des Abtastelements,
Fig. 3 eine optisch zwischen die Abbildungsoptiken des Wärmebildkanals geschaltete Temperatur-Referenz-Quelle,
Fig. 4a eine Scheibe aus teils reflektierendem teils transparentem Material für die Einspiegelung des Referenzsignals,
Fig. 4b eine Variante der Scheibe gemäß Fig. 4a,
Fig. 5 eine Variante der Anordnung gemäß Fig. 3 - mit einer geknickten optischen Achse im Wärmebildkanal,
Fig. 6 einen Wärmebildkanal mit zwei Temperatur-Referenz-Quellen und
Fig. 7 die Anordnung zweier Temperatur-Referenz-Quellen auf einem Flügelrad.

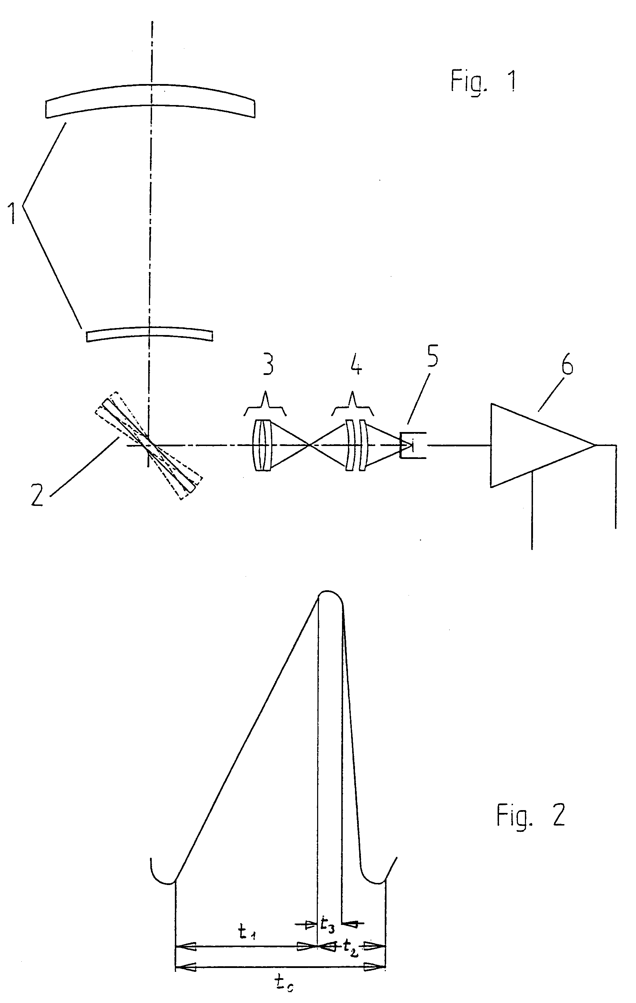

In Fig. 1 fällt die Wärmestrahlung einer Szene durch das IR-Teleskop 1 auf das in Ruhestellung (durchgehende Linienführung) z.B. unter 45° angeordnete Abtastelement 2, welches die Strahlung im rechten Winkel durch die beiden Abbildungsoptiken 3 und 4 des Detektorobjektivs 3, 4 hindurch auf den Detektor 5 bzw. seine Einzelelemente spiegelt. Die Abbildung erfolgt hierbei beispielsweise mittels zweier Halbbilder. Das heißt, daß die erste Abtastung alle ungeraden Zeilen 1, 3, 5 ect. und die zweite Abtastung alle geraden Zeilen 2, 4, 6 ect. erfaßt (Zeilenversatz). Nach optoelektronischer Umwandlung gelangt das Signal über den Verstärker 6 in die Signalverarbeitung.

Das Abtastelement 2 schwingt hierbei z.B. mit einer aus Fig. 2 ersichtlichen Amplitude und einer Abtastzeit t₀. Dieselbe setzt sich aus einer vergleichsweise langen aktiven Zeit t₁ und einer sehr viel geringeren inaktiven Zeit t₂ zusammen. Zur inaktiven Zeit zählt außerdem die Umkehrzeit t₃. Um eine Größenordnung anzugeben, seien beispielsweise folgende Zeitwerte genannt:
typisch t₀ = 20 ms
typisch t₁ = 14 ms
typisch t₂ = 6 ms
typisch t₃ = 2 ms

Insoweit handelt es sich um bekannten Stand der Technik.

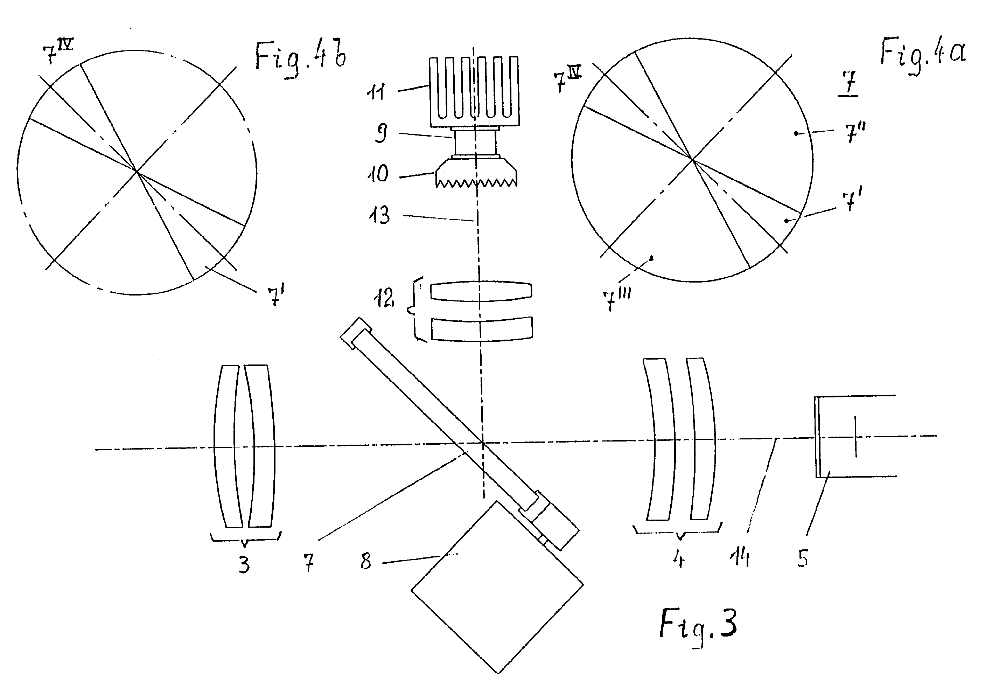

Fig. 3 unterscheidet sich nun gegenüber Fig. 1 im wesentlichen dadurch, daß zwischen den Abbildungsobjektiven 3 und 4, und zwar zweckmäßigerweise im Bereich des kleinsten Strahlungsquerschnitts, über die Scheibe 7 Strahlung der Temperatur-Referenz-Quelle 9-11 in die optische Achse 14 des Wärmebildkanals eingespiegelt wird. Die Einspiegelung erfolgt über das Objektiv 12. Die Abbildung der Quelle kann diffus oder fokal sein.

Die Temperatur-Referenz-Quelle 9-11 besteht aus dem Peltierelement 9, an dessen dem Wärmebildgerät zugewandter Seite der Strahler 10 und an der ihm abgewandten Seite die die Wärme ableitende Kühlfläche 11 angeordnet ist. Als Kühlfläche dienen in dem vorliegenden Ausführungsbeispiel Kühlrippen und als Strahler ein Kupferblock. In anderen Ausführungsbeispielen können auch andere Konfigurationen von Kühlflächen und Strahlern Verwendung finden, ohne daß dadurch der Rahmen der Erfindung verlassen würde.

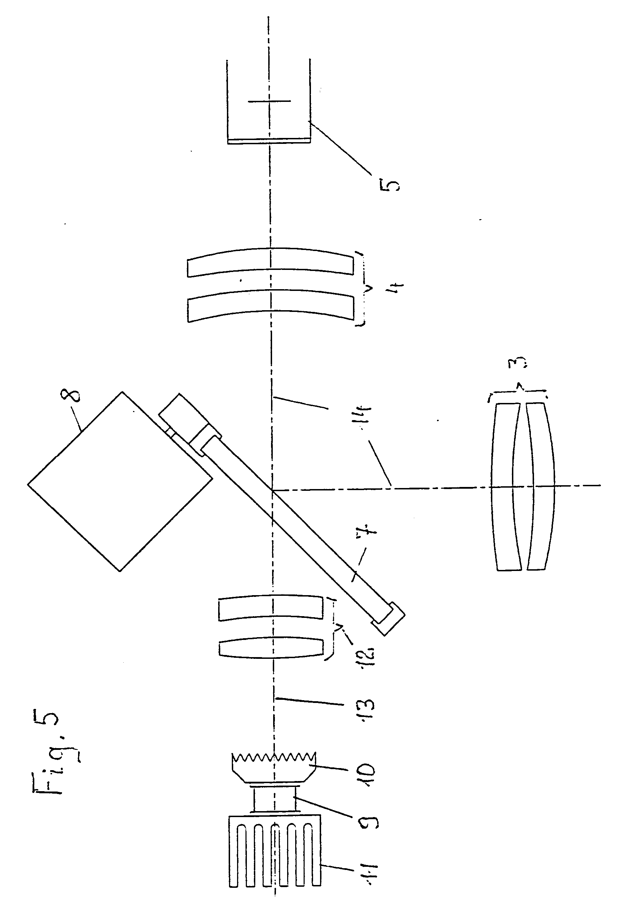

Die optischen Achsen von Wärmebildgerät und Temperatur-Referenz-Quelle 9-11 verlaufen in diesem Ausführungsbeispiel unter 90° zueinander, so daß die Scheibe 7 mit diesen Achsen einen Winkel von 45° einschließt. Sie weist - wie in Fig. 4a dargestellt - entlang ihres Durchmessers einen teilreflektierenden Bereich 7′ auf, an den zwei transparente Bereiche 7˝ und 7′′′ angrenzen. Gegenüber dem Bereich 7′ liegt ebenfalls ein teilreflektierender Bereich 7^{IV} Das Reflexionsvermögen des Bereichs 7′ liegt beispielsweise bei 80 %, das des Bereichs 7^{IV} bei 60 %.

Eine Variante, die beispielsweise in einem Aufbau nach der weiter unten besprochenen Fig. 5 verwendet würde, sieht vor, daß die Bereiche 7˝ und 7′′′ eine Reflexion von 100% aufweisen und die Bereiche 7′ und 7^{IV} jeweils unterschiedlich transparent sind (z.B. 80 % und 60 %).

Bei einer weiteren, in Fig. 4b dargestellten Variante sind von der ursprünglichen, mit unterbrochener Linienführung angedeuteten Scheibe nur die Bereiche 7′ und 7^{IV} mit ihren unterschiedlichen Reflexionen übrig, wohingegen die angrenzenden Segmente gewissermaßen durch Luft ersetzt werden.

Des weiteren ist eine Variante denkbar, die wiederum in einem Aufbau nach Fig. 5 Verwendung finden würde, bei der die Bereiche 7˝ und 7′′′ übrig bleiben und eine Reflexion von 100 % aufweisen, während die Bereiche 7′ und 7^{IV} durch Luft ersetzt sind.

Für die Funktion ist wesentlich, daß die Szenenabtastung den größten Teil der Periode gemäß Fig. 2 beansprucht und für den Abgleichvorgang lediglich die inaktiven Zeitintervalle t₂ und t₃ verfügbar sind. Deshalb wird zunächst über den Motor 8 die Scheibe 7 synchron zu dem Abtastelement 2 angetrieben. In dem Zeitintervall t₂ und/oder t₃ gelangen sodann - bedingt durch die unterschiedlich ausgebildete Reflexion bzw. Transparenz der Bereiche 7′ und 7^{IV} von Scheibe 7 - zwei unterschiedliche Strahlungsintensitäten entlang der optischen Achsen 13 und 14 in den Bereich der Verstärker 18, wo sie dann als Referenzsignale für das Einstellen von Empfindlichkeit und Verstärkung der Detektoreinzelelemente verfügbar sind. Die - im vorliegenden Ausführungsbeispiel bedingt durch die Ausbildung der Scheibe 7 - scheinbaren zwei Temperatur-Referenz-Quellen strahlen abwechselnd in die optische Achse, und zwar nach jedem Halbbild (inaktive Zeit).

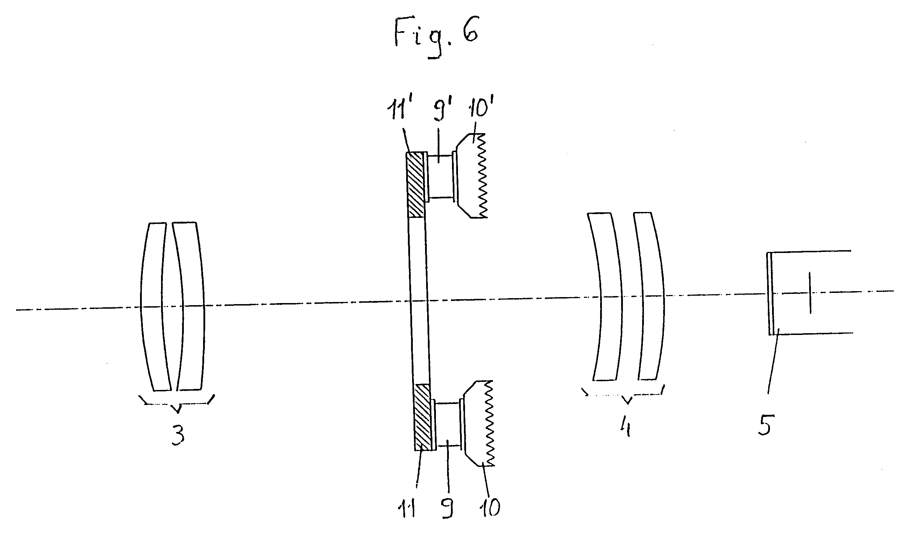

In Fig. 5 ist ein im wesentlichen Fig. 3 entsprechendes Ausführungsbeispiel dargestellt, bei dem aus konstruktiven Gründen die optische Achse 14 des Wärmebildkanals um 90 % geknickt ist, wobei für die Strahlenumlenkung die Scheibe 7 ausgenützt wird. Es wäre nun denkbar, daß bei diesem Ausführungsbeispiel den hohen Anforderungen an die optische Genauigkeit wegen der motorgetriebenen Bewegung der Scheibe 7 nicht voll entsprochen werden kann. In einem solchen Fall empfiehlt es sich, von den - über den Kunstgriff der speziellen Scheibenausbildung - nur scheinbar vorhandenen zwei Temperatur-Referenz-Quellen 9-11 und 9′-11′ auf zwei tatsächlich vorhandene Quellen entsprechend Fig. 6 auszuweichen. In den inaktiven Zeitintervallen t₂, t₃ oder t₂ + t₃ werden diese Quellen nacheinander in den Strahlengang eingeschoben, während für die Zeit t₁ der Mittelbereich der Scheibe 11, 11′ transparent ausgebildet sein muß.

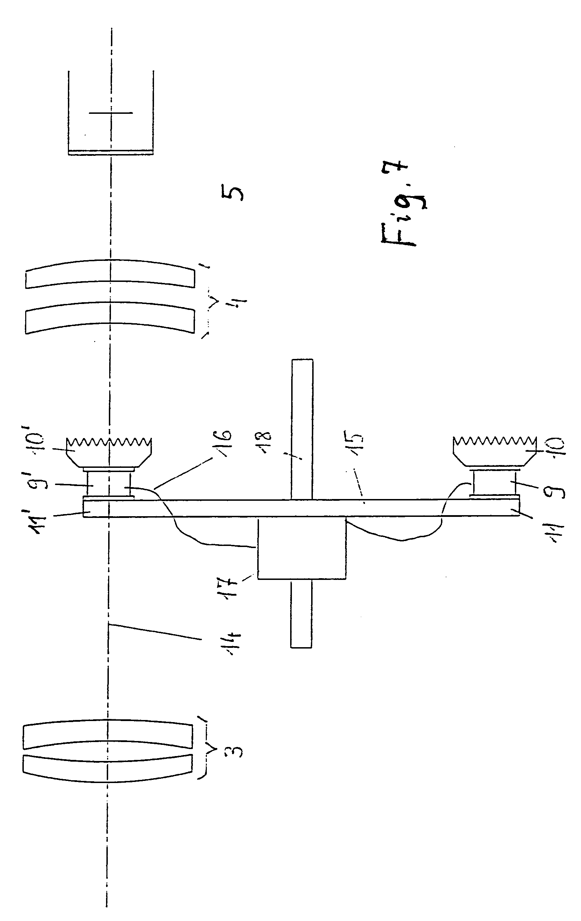

Fig. 7 zeigt einen Wärmebildkanal mit zwei Temperatur-Referenz-Quellen. Hier sind die Temperatur-Referenz-Quellen 9-11 und 9′-11′ in den äußeren Randbereichen der beiden Flügel des Flügelrades 15 elektrisch isoliert befestigt. Das Flügelrad ist auf der parallel zur optischen Achse 14 angeordneten Welle 18 drehbar gelagert und schwenkt im Verlauf der inaktiven Zeit die Quellen in den Strahlengang ein. Die Spannungszufuhr 16 an die Peltierelemente 9 bzw. 9′ erfolgt über Schleifringe 17.

Es versteht sich, daß im Bedarfsfall auch eine Kombination der Ausführungsbeispiele gemäß der Figuren 3 und 5 mit den zwei tatsächlich vorhandenen Temperatur-Referenz-Quellen der Figuren 6 und 7 möglich ist, ohne daß dies explizit dargestellt ist. Ferner ist auch in sämtlichen vorstehend behandelten Ausführungsbeispielen eine Erhöhung der Anzahl sowohl der tatsächlich vorhandenen als auch der scheinbaren Temperatur-Referenz-Quellen denkbar, wobei letzterer Fall eine entsprechend abgeänderte Ausgestaltung der Scheibe 7 erfordert.

## Patentansprüche

1. Wärmebildgerät mit folgenden in Strahlendurchtrittsrichtung hintereinander angeordneten Elementen:
a) einem IR-Teleskop (1),
b) einem Abtastelement (2) zum Abtasten der Wärmestrahlung einer Szene,
c) einem Detektorobjektiv (3,4), in dessen Nachbarschaft eine Temperatur-Referenz-Quelle (9-11;9′-11′) vorgesehen ist,
d) einem Detektor (5) mit Detektoreinzelelementen, sowie mit einem dem Detektor (5) nachgeschalteten Verstärker (6) mit einer Abgleicheinrichtung, die das vom Detektor (5) bei Empfang der Strahlung der Temperatur-Referenz-Quelle (9-11;9′-11′) erzeugte Signal zum Abgleich der Verstärkung des Verstärkers verwendet, einer optoelektronischen Umwandlungseinrichtung, die die Signale des Verstärkers zur Sichtbarmachung empfängt, und
einer drehbar gelagerten kreisförmigen Scheibe (7), die derart bezüglich des Detektorobjektivs (3,4) und der Temperatur-Referenz-Quelle (9-11;9′-11′) angeordnet ist, daß sie die vom Objektiv (3,4) bzw. der Temperatur-Referenz-Quelle (9-11;9′-11′) einfallende Strahlung jeweils wechselweise zum Detektor (5) hinlenkt und die entlang eines Durchmessers einen teilreflektierenden Bereich (7′,7′′′) aufweist und über einen Motor (8) synchron zum Abtastelement (2) angetrieben wird, dadurch gekennzeichnet daß,
der Bereich aus zwei symmetrisch bezüglich des Scheibenmittelpunkts angeordneten Teilbereichen (7′ bzw. 7′′′) mit jeweils unterschiedlicher Teilreflektion gebildet ist, an die beiderseits transparente Scheibensegmente (7˝,7′′′) angrenzen.

2. Wärmebildgerät mit folgenden in Strahlendurchtrittsrichtung hintereinander angeorneten Elementen:
a) einem IR-Teleskop (1),
b) einem Abtastelement (2) zum Abtasten der Wärmestrahlung einer Szene,
c) einem Detektorobjektiv (3,4), in dessen Nachbarschaft eine Temperatur-Referenz-Quelle (9-11;9′-11′) vorgesehen ist,
d) einem Detektor (5) mit Detektoreinzelelementen, sowie mit einem dem Detektor (5) nachgeschalteten Verstärker (6) mit einer Abgleicheinrichtung, die das vom Detektor (5) bei Empfang der Strahlung der Temperatur-Referenz-Quelle (9-11;9′-11′) erzeugte Signal zum Abgleich der Verstärkung des Verstärkers verwendet, einer optoelektronischen Umwandlungseinrichtung, die die Signale des Verstärkers zur Sichtbarmachung empfängt, und
einer drehbar gelagerten kreisförmigen Scheibe (7), die derart bezüglich des Detektorobjektivs (3,4) und der Temperatur-Referenz-Quelle (9-11;9′-11′) angeordnet ist, daß sie die vom Objektiv (3,4) bzw. der Temperatur-Referenz-Quelle (9-11;9′-11′) einfallende Strahlung jeweils wechselweise zum Detektor (5) hinlenkt und die entlang eines Durchmessers einen Bereich (7′,7′′′), dessen Transmissionsvermögen gegenüber dem Rest der Scheibe unterschiedlich ist, aufweist und über einen Motor (8) synchron zum Abtastelement (2) angetrieben wird, dadurch gekennzeichnet daß,
der Bereich aus zwei symmetrisch bezüglich des Scheibenmittelpunkts angeordneten Teilbereichen (7′ bzw. 7′′′) mit jeweils Unterschiedlicher Transmission gebildet ist, an die beiderseits total reflektierende Scheibensegmente (7˝,7′′′) angrenzen.

3. Wärmebildgerät nach Anspruch 1 und 2, **dadurch gekennzeichnet**, daß die zu der Scheibe (7) mit ihren unterschiedlich transparenten oder reflektierenden Teilbereichen (7′, 7^{IV}) gehörende Temperatur-Referenz-Quelle (9-11) ein Peltierelement (9) ist, an dessen dem Wärmebildgerät zugewandter Seite ein Strahler (10) vorgesehen ist, während an der letzterem gegenüber liegenden Seite eine Kühlfläche (11) die Wärme ableitet.

4. Wärmebildgerät nach Anspruch 3, **dadurch gekennzeichnet**, daß der Strahler (10) im wesentlichen aus einem Kupferblock und die Kühlfläche aus einer Anzahl von Kühlrippen besteht.

## Claims

1. Thermal imaging device with the following elements arranged one behind the other in the direction in which the rays penetrate:
a) an IR telescope (1);
b) a scanner element (2) for scanning the thermal radiation of a scene;
c) a detector lens (3, 4) in the vicinity of which a temperature reference source (9-11; 9′-11′) is provided;
d) a detector (5) with individual detector elements and with an amplifier (6) which is arranged downstream of the detector (5) and has a compensating device, which uses the signal generated by the detector (5) when it receives the rays from the temperature reference source (9-11; 9′-11′) to compensate the amplification of the amplifier, an optoelectronic conversion device, which receives the signals from the amplifier for visualisation, and a rotatably mounted circular disc (7), which is disposed in relation to the detector lens (3, 4) and the temperature reference source (9-11; 9′-11′) in such a manner that it deflects the incident rays from the lens (3, 4) or the temperature reference source (9-11; 9′-11′), alternately in each case, to the detector (5), and which has a partially reflective area (7′ 7^{′V}) along one diameter, and which is driven synchronously with the scanner element (2) by a motor (8), characterised in that the area is formed of two partial areas (7′ or 7^{′V}) which are arranged symmetrically relative to the centre point of the disc and which each have differing partial reflections, and which are bordered on both sides by transparent disc segments (7˝, 7′′′).

2. Thermal imaging device having the following elements arranged one behind the other in the order in which the rays penetrate:
a) an IR telescope (1);
b) a scanner element (2) for scanning the thermal radiation of a scene;
c) a detector lens (3, 4) in the vicinity of which a temperature reference source (9-11; 9′-11′) is provided;
d) a detector (5) with individual detector elements and with an amplifier (6) which is arranged downstream of the detector (5) and has a compensating device which uses the signal generated by the detector (5) when it receives the rays from the temperature reference source (9-11; 9′-11′) to compensate the amplification of the amplifier, an optoelectronic conversion device which receives the signals of the amplifier for visualisation, and a rotatably mounted circular disc (7) which is disposed in relation to the detector lens (3, 4) and the temperature reference source (9-11; 9′-11′) in such a manner that it deflects the incident rays from the lens (3, 4) or the temperature reference source (9-11; 9′-11′), alternately in each case, to the detector (5), and which has, along one diameter an area (7′, 7^{′V}) the transmission potential of which differs in relation to the remainder of the disc, and is driven by a motor (8) synchronously with the scanner element (2), characterised in that the area is formed of two partial areas (7′ or 7^{′V} ) which are arranged symmetrically relative to the centre point of the disc and which each have differing transmissions, and which are bordered on both sides by totally reflective disc segments (7′′, 7′′′).

3. Thermal imaging device according to Claims 1 and 2, characterised in that the temperature reference source (9-11) belonging to the disc (7), together with its partial areas (7′, 7^{IV}) which are transparent or reflective to different extents, is a Peltier element (9), on the side of which facing the thermal imaging device a radiation device (10) is provided, whereas on the side thereof that is opposite the latter, a cooling surface (11) dissipates the heat.

4. Thermal imaging device according to Claim 3, characterised in that the radiation device (10) substantially consists of a copper block and the cooling surface consists of a number of cooling ribs.

## Revendications

1. Dispositif de formation d'image thermique comprenant les éléments suivants disposés les uns derrière les autres dans la direction du parcours du rayonnement :
a) un télescope infrarouge (1) ;
b) un élément capteur (2) pour détecter le rayonnement thermique d'une scène ;
c) un objectif détecteur (3,4) au voisinage duquel on prévoit une source de référence de température (9-11;9′-11′) ;
d) un détecteur (5) comprenant des éléments détecteurs séparés ainsi qu'un amplificateur (6) branché en aval du détecteur (5) et muni d'un dispositif d'égalisation qui utilise le signal fourni par le détecteur (5) lors de la réception du rayonnement de la source de référence de température (9-11;9′-11′) pour égaliser l'amplification de l'amplificateur, un dispositif de conversion optoélectronique qui reçoit les signaux de l'amplificateur en vue de la visualisation ; et
c) un disque (7) de forme circulaire, monté à rotation, qui est disposé par rapport à l'objectif du détecteur (3,4) et la source de référence de température (9-11;9′-11′) de telle manière qu'il dirige le rayonnement incident provenant de l'objectif (3,4) ou de la source de référence de température (9-11;9′-11′) à chaque fois de manière alternative vers le détecteur (5) et qui présente le long d'un diamètre une zone partiellement réfléchissante (7',7^{IV}) et est entraînée par l'intermédiaire d'un moteur (8) de manière synchrone vers l'élément capteur (2), caractérisé en ce que
la zone est constituée de deux zones partielles (7′ respectivement 7^{IV}), disposées de manière symétrique par rapport au centre du disque, présentant des réflections partielles différentes et qui sont limitées des deux côtés par des segments de disque transparents ( 7˝, 7′′′).

2. Dispositif de formation d'image thermique comprenant les éléments suivants disposés les uns derrière les autres dans la direction du parcours du rayonnement :
a) un télescope infrarouge (1) ;
b) un élément capteur (2) pour détecter le rayonnement thermique d'une scène ;
c) un objectif détecteur (3,4) au voisinage duquel on prévoit une source de référence de température (9-11;9′-11′) ;
d) un détecteur (5) comprenant des éléments détecteurs séparés ainsi qu'un amplificateur (6) branché en aval du détecteur (5) et muni d'un dispositif d'égalisation qui utilise le signal fourni par le détecteur (5) lors de la réception du rayonnement de la source de référence de température (9-11;9'-11') pour égaliser l'amplification de l'amplificateur, un dispositif de conversion optoélectronique qui reçoit les signaux de l'amplificateur en vue de la visualisation ; et
c) un disque (7) de forme circulaire, monté à rotation, qui est disposé par rapport à l'objectif du détecteur (3,4) et la source de référence de température (9-11;9′-11′) de telle manière qu'il dirige le rayonnement incident provenant de l'objectif (3,4) ou de la source de référence de température (9-11;9′-11′) à chaque fois de manière alternative vers le détecteur (5) et qui présente, le long d'un diamètre, une zone (7',7^{IV}) dont le pouvoir de transmission est différent par rapport au reste du disque et qui est entraînée par l'intermédiaire d'un moteur (8) de manière synchrone vers l'élément détecteur (2), caractérisé en ce que
la zone est constituée de deux zones partielles (7′ respectivement 7^{IV}), disposées de manière symétrique par rapport au centre du disque, présentant des réflections partielles différentes qui sont limitées des deux côtés par des segments de disque transparents (7˝ ,7′′′).

3. Dispositif de formation d'image thermique selon la revendication 1 ou 2, caractérisé en ce que la source de référence de température (9-11) appartenant au disque (7) comportant ses zones partielles (7′ 7^{IV}) à transparence ou réflection différente est un élément à effet Peltier (9) dont le côté dirigé vers le dispositif de formation d'image thermique est muni d'un radiateur (10), alors que sur l'autre côté se trouvant à l'opposé du radiateur, on prévoit une surface de refroidissement (11) qui enlève la chaleur.

4. Dispositif de formation d'image thermique selon la revendication 3, caractérisé en ce que le radiateur (10) est essentiellement constitué d'un bloc de cuivre et en ce que la surface de refroidissement est constituée par un certain nombre d'ailettes de refroidissement.
